# EUROPÄISCHE PATENTSCHRIFT

(11) **EP 4 064 223 B1**
(45) Veröffentlichungstag und Bekanntmachung des Hinweises auf die Patenterteilung: **19.08.2026**
(21) Anmeldenummer: 22160166.9
(22) Anmeldetag: 04.03.2022
(51) Int. Cl.: G06V 20/80, G07D 7/20, G07D 7/2033, G06V 10/22, G06V 10/44

(54) **VERFAHREN UND VORRICHTUNG ZUM VERIFIZIEREN EINER ECHTHEIT EINES OBJEKTS**
METHOD AND DEVICE FOR VERIFYING THE AUTHENTICITY OF AN OBJECT
PROCÉDÉ ET DISPOSITIF DE VÉRIFICATION DE L'AUTHENTICITÉ D'UN OBJET

(30) Priorität: 26.03.2021 DE 102021203081
(43) Veröffentlichungstag der Anmeldung: 28.09.2022
(73) Patentinhaber: Robert Bosch GmbH, 70442 Stuttgart (DE)
(72) Erfinder: Simon, Stephan, 31079 Sibbesse (DE)

(56) Entgegenhaltungen:
- EP-A1- 3 428 853
- DE-A1- 10 304 805
- DE-A1- 102019 210 580
- US-B2- 10 956 732

## Beschreibung

### Stand der Technik

Die Erfindung geht von einer Vorrichtung oder einem Verfahren nach Gattung der unabhängigen Ansprüche aus. Gegenstand der vorliegenden Erfindung ist auch ein Computerprogramm.

In der DE 10 2019 210 580 A1 ist ein Verfahren zum Ermitteln einer Position eines ersten Bildbereichs in einem Korrespondenz-Bild bzw. zur Korrespondenzfindung zwischen Bildern beschrieben. Dabei wird zu einer Referenzposition für einen ersten Bildbereich in einem ersten Bild die korrespondierende Position in einem zweiten Bild gefunden. Die DE 103 04 805 A1 offenbart ein Verfahren zur Herstellung von Sicherheitskennzeichen, wobei das Sicherheitskennzeichen ein Zufallsmuster enthält, welches auf das Produkt aufgebracht wird. Systeme und Verfahren zum Nachweis der Echtheit von Produkten. Die US 10,956,732 B2 beschreibt ein System und Verfahren zum Nachweis der Echtheit von Produkten bzw. zur eindeutigen Identifizierung von Artikeln, um echte Artikel von gefälschten Artikeln zu unterscheiden. In der EP 3 428 853 A1 ist ein Verfahren zum Schützen eines Produkts gegen Fälschungen gezeigt, wobei Sicherheitsmerkmale auf eine Produktverpackung aufgebracht werden.

### Offenbarung der Erfindung

Vor diesem Hintergrund werden mit dem hier vorgestellten Ansatz ein Verfahren, weiterhin eine Vorrichtung, welche dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Gemäß Ausführungsformen kann insbesondere eine Verifizierung einer Echtheit eines Objekts anhand von optisch erkennbaren, für das Objekt einzigartigen Zufallsmerkmalen auf Basis einer geeigneten Bildverarbeitung zur Erzeugung eines Fingerabdrucks des fraglichen Objekts erreicht werden, unter Verwendung dessen die Verifizierung erfolgen kann. Beispielsweise kann so das fälschungssichere Identifizieren von Objekten aller Art ermöglicht werden, beispielsweise Banknoten, Papieren, Verpackungen von Medikamenten oder Originalteilen, sogar von lebenden oder toten Lebewesen oder Pflanzen. Zusätzlich oder alternativ kann auch eine Echtheitsprüfung, insbesondere mit einem Client und einem Server, ermöglicht werden, wobei eine fälschungssichere, natürlich vorhandene Eigenschaft des Objekts optional kombiniert mit einem offensichtlichen Code, wie zum Beispiel einer Seriennummer, des Objekts genutzt werden können.

Es wird ein Verfahren gemäß Anspruch 1 zum Verifizieren einer Echtheit eines Objekts vorgestellt.

Unter Verifizieren der Echtheit kann verstanden werden, dass das Objekt eindeutig identifiziert wird, wie beispielsweise aus einer Mehrzahl von ähnlichen Objekten. In diesem Fall kann das Verfahren zum Identifizieren des Objekts ausgeführt werden. Zusätzlich oder alternativ kann unter Verifizieren der Echtheit verstanden werden, dass überprüft werden kann, ob das Objekt echt ist oder eine Fälschung ist. Bei dem Objekt kann es sich beispielsweise um einen Geldschein, ein Zertifikat, einen zertifizierten Wertgegenstand, ein Medikament, ein Ersatzteil, ein Originalteil, ein Kunstwerk oder dergleichen handeln. Die optisch erkennbaren, für das Objekt einzigartigen Zufallsmerkmale können beispielsweise dadurch bedingt, dass ein Material des Objekts wenigstens eine Merkmalseigenschaft aufweist, die aus dem Zufall bzw. aus einem Zufallsprozess beispielsweise bei dessen Herstellung resultiert, höchstens teilweise nachahmbar ist und hinreichende Eindeutigkeit bietet. Die optisch erkennbaren, für das Objekt einzigartigen Zufallsmerkmale können auch als fälschungssichere zufällige Merkmale bezeichnet werden. Ein Objektfingerabdruck kann eine digitale Repräsentation des oder der fälschungssicheren zufälligen Merkmals oder Merkmale sein. Ein Signaturwert kann eine Bitfolge sein, die auch als Zahl aufgefasst werden kann und die einen Bildinhalt einer lokalen Umgebung um eine betrachtete Position, beispielsweise um ein aktuelles Pixel, kennzeichnet. Das Gerät zur Objektbeurteilung kann beispielsweise als ein mobiles Nutzerendgerät, ein Mobiltelefon, ein Geldzählgerät, ein Geldausgabegerät, ein Terminal zur Bargeldzahlung, ein Prüfgerät an Bargeldkasse oder dergleichen ausgeführt sein.

Ein Signaturwert kann einen Wert des Deskriptors für ein Pixel beschreiben, beispielsweise in einer binären Darstellung bzw. einer Darstellung mit mehreren Bits bzw. einem Datenwort. Jeder Signaturwert kann für jedes Filter des Deskriptors ein Vorzeichen aufweisen, wobei dieses dem Vorzeichen der Filterantwort an entsprechender Stelle entsprechen kann. Eine solche Ausführungsform bietet den Vorteil, dass ein besonders zuverlässiger und genauer Prüf-Objektfingerabdruck generiert werden kann, um eine sichere und eindeutige Verifizierung zu ermöglichen. Zudem kann durch die Verwendung von Signaturwerten und Deskriptoren erreicht werden, dass die Verifizierung unabhängig von einem aktuellen Zustand des Objekts verglichen mit einem Ursprungszustand oder Referenzzustand des Objekts zuverlässig durchgeführt werden kann.

Die Ergebnisdaten können abhängig von einer Übereinstimmung zwischen den Verifizierungsdaten mit einem Referenzdatensatz bereitgestellt werden. Die Ergebnisdaten können beispielsweise eine Identifikationsinformation zum Identifizieren des Objekts, eine Verifizierungsinformation über die Echtheit des Objekts und zusätzlich oder alternativ eine Zusatzinformation hinsichtlich des Objekts umfassen. Der Referenzdatensatz kann Referenz-Bilddaten umfassen, die das vorab als echt bestätigte Objekt repräsentieren. Der Referenz-Objektfingerabdruck kann unter Verwendung der Referenz-Bilddaten generiert werden. Eine solche Ausführungsform bietet den Vorteil, dass eine sichere und exakte Verifizierung der Echtheit des Objekts erreicht werden kann.

Insbesondere kann der Prüf-Objektfingerabdruck auf einen kleineren Teilabschnitt des Objekts bezogen sein als der Referenz-Objektfingerabdruck. Dies kann es einem Anwender ermöglichen, einen Bildausschnitt für das Aufnehmen der Bilddaten selbst nach Belieben auszuwählen oder, um besonders sicher sein zu können bezüglich der Echtheit, mehrere Echtheitsprüfungen mit verschiedenen Bildausschnitten durchzuführen.

Der Identifikationscode kann an dem Objekt angeordnet sein, beispielsweise aufgedruckt oder dergleichen. Eine solche Ausführungsform bietet den Vorteil, dass durch ein solches Kombinieren eine besonders sichere und zuverlässige Echtheitsprüfung ermöglicht werden kann, wobei die Verifizierung der Echtheit des Objekts im Hinblick auf eine Vielzahl von vergleichbaren, mit Identifikationscodes versehenen Vergleichsobjekten vereinfacht werden kann.

Dabei kann der zumindest eine Teil des Identifikationscodes alternativ unter Verwendung der Bilddaten erkannt werden, wobei dies nicht Bestandteil der vorliegenden Erfindung ist. Hierbei kann der zumindest eine Teil des Identifikationscodes im Schritt des Verarbeitens unter Verwendung der Bilddaten erkannt werden. Eine solche Ausführungsform bietet den Vorteil, dass ein Nutzer des Gerätes insbesondere wählen kann, ob der zumindest eine Teil des Identifikationscodes zum Beispiel eingegeben oder aus den Bilddaten erkannt werden soll. Somit kann ein Vertrauen von Nutzern in das Verfahren erhöht werden.

eine Zusatzinformation hinsichtlich des Objekts umfassen, wobei dies nicht Bestandteil der vorliegenden Erfindung ist. Der Referenzdatensatz kann Referenz-Bilddaten umfassen, die das vorab als echt bestätigte Objekt repräsentieren. Der Referenz-Objektfingerabdruck kann unter Verwendung der Referenz-Bilddaten generiert werden. Eine solche Ausführungsform bietet den Vorteil, dass eine sichere und genaue Aussage hinsichtlich der Echtheit des Objekts getroffen werden kann.

Dabei kann im Schritt des Verarbeitens der Prüf-Objektfingerabdruck mit einem Teil des Identifikationscodes kombiniert werden. Hierbei können im Schritt des Bereitstellens Ergebnisdaten bereitgestellt werden, die den vollständigen Identifikationscode umfassen. Eine solche Ausführungsform bietet den Vorteil, dass ein Vertrauen eines Nutzers des Gerätes in die Gültigkeit der Verifizierung weiter gesteigert werden kann.

Ferner kann dabei im Schritt des Durchführens des Vergleichs der Prüf-Objektfingerabdruck verwendet werden, um den mit demselben übereinstimmenden Referenz-Objektfingerabdruck zu aktualisieren und zusätzlich oder alternativ um eine Zustandsbewertung des Objekts vorzunehmen. Hierbei können im Schritt des Bereitstellens die Zustandsbewertung umfassende Ergebnisdaten bereitgestellt werden. Anders ausgedrückt können die Ergebnisdaten hierbei die Zustandsbewertung umfassen bzw. repräsentieren. Eine solche Ausführungsform bietet den Vorteil, dass Referenzdatensätze auf einfache und zuverlässige Weise aktuell gehalten werden können und zusätzlich oder alternativ ermöglicht werden kann, einen die zuverlässige Verifizierung möglicherweise zukünftig beeinträchtigenden Zustand des Objekts frühzeitig zu beheben.

Zudem können hierbei im Schritt des Durchführens des Vergleichs Signaturwerte des Prüf-Objektfingerabdrucks mit Signaturwerten eines Referenz-Objektfingerabdrucks verglichen werden, um eine Korrespondenz zwischen dem Prüf-Objektfingerabdruck und einem mit demselben übereinstimmenden Referenz-Objektfingerabdruck zu finden. Dabei kann die Korrespondenz unter Verwendung einer Nachschlagtabelle und eines Abstimmungsbildes gefunden werden. Für die Nachschlagtabelle können Signaturwerte als Adressen dienen. Zusätzlich oder alternativ kann die Nachschlagtabelle für jeden eingetragenen Signaturwert einen örtlichen Versatz einer Pixelposition eines Bezugspixels des Signaturwerts relativ zu einer Referenzposition umfassen. Hierbei können für das Abstimmungsbild Stimmgewichte für die Referenzposition unter Verwendung der Nachschlagtabelle abgegeben werden und zusätzlich oder alternativ kann das Abstimmungsbild gefiltert werden, um ein globales Maximum in dem Abstimmungsbild als die Referenzposition zu identifizieren. Ein globales Maximum kann einer gefundenen Korrespondenz entsprechen. Jedem Signaturwert kann ein Versatz zum Beispiel des zugehörigen zentralen Pixels zu einer gemeinsamen Referenzposition zugeordnet sein. Die Referenzposition kann beispielsweise eine Bildausschnittmitte sein oder eine Position eines markanten und eindeutigen Punkts oder Merkmals auf dem Objekt. Der gespeicherte Versatz kann auf die aktuelle Position im Referenz-Objektfingerabdruck angewendet werden, insbesondere addiert werden. An einer dabei resultierenden Position kann eine Stimme abgegeben werden, die für die Lage der zu suchenden korrespondierenden Position abstimmt. Dieses Vorgehen für eine Vielzahl von Deskriptoren aus dem Referenz-Objektfingerabdruck führt zu einer konzentrierten Häufung von Stimmen an der korrespondierenden Position, die in der Regel als Gewinner aus der Abstimmung hervorgeht. Das optionale Filtern kann unter Verwendung eines Glättungsfilters erfolgen, das auf Stimmgewichte der Abstimmung angewendet wird, wobei insbesondere Nebenmaxima unterdrückt werden können, während das gesuchte globale Maximum erhaben bleibt. Eine solche Ausführungsform bietet den Vorteil, dass der Vergleich zwischen den Objektfingerabdrücken sicher, schnell, effizient und genau durchgeführt werden kann und ein zuverlässiges Ergebnis erhalten werden kann. Entscheidend ist insbesondere, dass es bei der Abstimmung im Falle einer Übereinstimmung zu einer herausragenden Häufung kommt, während bei verschiedenen Objekten die Stimmgewichte in alle Richtungen verstreut werden und es zu keiner starken Häufung kommt.

Gemäß einer Ausführungsform können im Schritt des Einlesens Bilddaten eingelesen werden, die mindestens eine Aufnahme des zumindest einen Teilabschnitts des Objekts repräsentieren. Hierbei kann die mindestens eine Aufnahme unter Verwendung zumindest einer für die Aufnahme vordefinierten Beleuchtungseinstellung erstellt sein. Beispielsweise kann eine erste Aufnahme mit einer ersten Beleuchtungseinstellung aufgenommen werden und kann eine zweite Aufnahme mit einer von der ersten unterschiedlichen, zweiten Beleuchtungseinstellung aufgenommen werden. Eine solche Ausführungsform bietet den Vorteil, dass die optisch erkennbaren, für das Objekt einzigartigen Zufallsmerkmale zuverlässig und genau in den Bilddaten erfasst werden können. Dieses Verfahren kann beispielsweise in Software oder Hardware oder in einer Mischform aus Software und Hardware beispielsweise in einem Steuergerät implementiert sein. Hinsichtlich weiterer Einzelheiten zu Ausführungsbeispielen wird auch auf die DE 10 2019 210 580 A1 verwiesen.

Eine Ausführungsform der vorliegenden Erfindung umfasst eine Vorrichtung gemäß Anspruch 5.

Auch durch diese Ausführungsvariante der Erfindung in Form einer Vorrichtung kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Bei den Sensorsignalen kann es sich beispielsweise um Bildsignale von der Bildaufnahmeeinrichtung handeln. Bei den Sensorsignalen kann es sich somit um Signale einer Kamera oder dergleichen handeln. Bei den Steuer- und/oder Datensignalen kann es sich um Signale handeln, welche an eine Steuereinheit, beispielsweise innerhalb oder außerhalb des Gerätes, gesendet werden. Anhand dieser Signale kann dann die Steuereinheit entscheiden, ob und/oder welche Handlungen eingeleitet oder empfohlen werden. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Weitere Ausführungsformen der vorliegenden Erfindung umfassen ein Computerprogramm gemäß Anspruch 6 und ein maschinenlesbares Speichermedium gemäß Anspruch 7.

Es wird auch ein Gerät zur Objektbeurteilung vorgestellt, wobei das Gerät eine Ausführungsform der vorstehend genannten Vorrichtung aufweist, wobei das Gerät die Bildaufnahmeeinrichtung aufweist, wobei die Bildaufnahmeeinrichtung und die Vorrichtung datenübertragungsfähig miteinander verbunden sind.

Das Gerät kann hierbei eine Funktion oder Funktionalität zur Objektbeurteilung und optional zusätzlich zumindest eine weitere Funktion oder Funktionalität unabhängig von der Objektbeurteilung aufweisen. Die Vorrichtung kann in Verbindung mit dem Gerät vorteilhaft zum Verifizieren der Echtheit eines Objekts eingesetzt oder verwendet werden. Hierbei kann die Vorrichtung ausgebildet sein, um das Verifizieren Client-Server-basiert auszuführen. Client und Server können hierbei auch auf demselben Gerät ausführbar sein.

Insbesondere können gemäß Ausführungsformen somit eine fälschungssichere Identifikation von Objekten und/oder ein skalierbares Verifikationsverfahren bereitgestellt werden, beispielsweise auf Client-Server-basierte Weise.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Gerätes zur Objektbeurteilung mit einer Vorrichtung zum Verifizieren einer Echtheit eines Objekts gemäß einem Ausführungsbeispiel;
Fig. 2 ein Ablaufdiagramm eines Ausführungsbeispiels eines Verfahrens zum Verifizieren einer Echtheit eines Objekts;
Fig. 3 eine schematische Darstellung eines Objekts mit einem Teilabschnitt, eines als echt bestätigten Objekts und eines Abstimmungsbilds in Zusammenhang mit der Vorrichtung aus Fig. 1 und/oder mit dem Verfahren aus Fig. 2; und
Fig. 4 eine schematische Darstellung eines Objekts mit einem Teilabschnitt, eines als echt bestätigten Objekts und eines Abstimmungsbilds in Zusammenhang mit der Vorrichtung aus Fig. 1 und/oder mit dem Verfahren aus Fig. 2.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

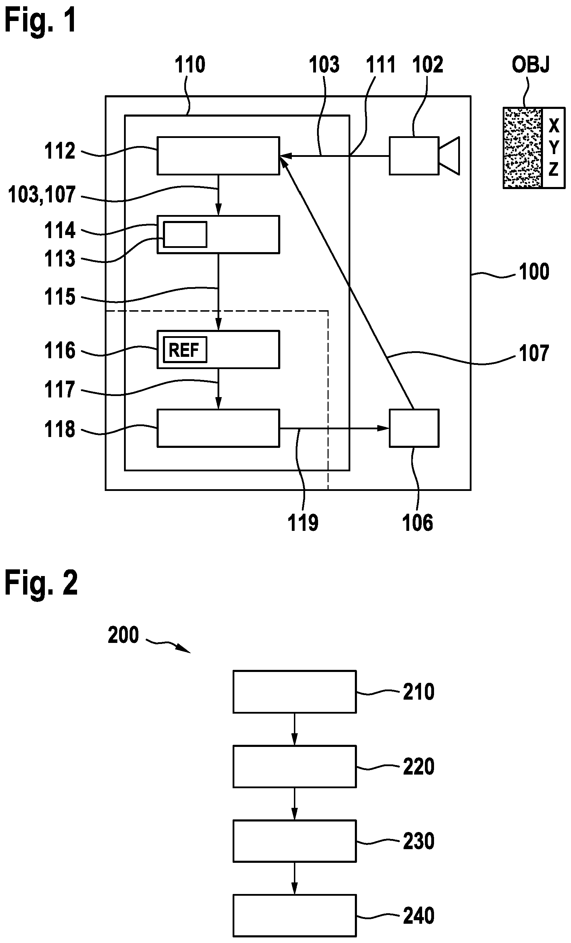

Fig. 1 zeigt eine schematische Darstellung eines Gerätes 100 zur Objektbeurteilung mit einer Vorrichtung 110 zum Verifizieren einer Echtheit eines Objekts OBJ gemäß einem Ausführungsbeispiel. Das Gerät 100 zur Objektbeurteilung ist beispielsweise als ein mobiles Nutzerendgerät, ein Mobiltelefon, ein Geldzählgerät, ein Geldausgabegerät, ein Terminal zur Bargeldzahlung, ein Prüfgerät an Bargeldkasse oder dergleichen ausgeführt. Das Gerät 100 umfasst die Vorrichtung 110. Ferner umfasst das Gerät 100 eine Bildaufnahmeeinrichtung 102. Die Bildaufnahmeeinrichtung 102 und die Vorrichtung 110 sind datenübertragungsfähig miteinander verbunden. Die Bildaufnahmeeinrichtung 102 ist hierbei als eine Kamera ausgeführt. Mittels der Bildaufnahmeeinrichtung 102 sind Bilddaten 103 erzeugbar, die zumindest einen Teilabschnitt des Objekts OBJ repräsentieren. Das Objekt OBJ umfasst optisch erkennbare, für das Objekt einzigartige Zufallsmerkmale. Bevorzugt weist der zumindest eine Teilabschnitt des Objekts OBJ die optisch erkennbaren, für das Objekt (OBJ) einzigartigen Zufallsmerkmale auf. Gemäß dem hier dargestellten Ausführungsbeispiel umfasst das Gerät 100 auch eine Benutzerschnittstelle 106. Auch die Benutzerschnittstelle 106 und die Vorrichtung 100 sind datenübertragungsfähig miteinander verbunden.

Die Vorrichtung 110 ist ausgebildet, um eine Verifizierung die Echtheit des Objektes OBJ zu ermöglichen und/oder zu bewirken. Dazu umfasst die Vorrichtung 110 eine Einleseeinrichtung 112 und eine Verarbeitungseinrichtung 114. Die Einleseeinrichtung 112 ist ausgebildet, um die Bilddaten 103 von einer Schnittstelle 111 bzw. Eingangsschnittstelle der Vorrichtung 110 zu der Bildaufnahmeeinrichtung 102 einzulesen. Ferner ist die Einleseeinrichtung 112 ausgebildet, um die eingelesenen Bilddaten 103 an die Verarbeitungseinrichtung 114 weiterzugeben. Die Verarbeitungseinrichtung 114 ist ausgebildet, um die Bilddaten 103 unter Verwendung einer Verarbeitungsvorschrift 113 zu verarbeiten, um einen Prüf-Objektfingerabdruck des Objekts OBJ als Verifizierungsdaten 115 zum Verifizieren für einen Vergleich mit einem Referenz-Objektfingerabdruck zu generieren. Gemäß der Verarbeitungsvorschrift 113 wird eine Mehrzahl von Signaturwerten für eine Mehrzahl von Pixeln einer Bildregion der Bilddaten bestimmt.

Insbesondere ist die Verarbeitungseinrichtung 114 gemäß einem Ausführungsbeispiel ausgebildet, um jeden der Signaturwerte unter Verwendung eines Deskriptors mit einer Mehrzahl von unterschiedlichen Filtern zu bestimmen. Der Deskriptor ist dabei ausgebildet, um einen Bildinhalt in einer lokalen Umgebung um ein Pixel herum in einer kompakten Form zu beschreiben.

Gemäß einem Ausführungsbeispiel umfasst die Vorrichtung 110 ferner eine Durchführungseinrichtung 116 und eine Bereitstellungseinrichtung 118. Alternativ sind die Durchführungseinrichtung 116 und die Bereitstellungseinrichtung 118 außerhalb des Geräts 100 bzw. in einem weiteren Gerät realisiert, beispielsweise in einem Server, das mit dem Gerät 100 datenübertragungsfähig verbunden ist. Die Durchführungseinrichtung 116 ist ausgebildet, um unter Verwendung der Verifizierungsdaten 115 und eines Referenzdatensatzes REF einen Vergleich des Prüf-Objektfingerabdrucks mit zumindest einem Referenz-Objektfingerabdruck durchzuführen. Für jedes vorab als echt bestätigte Objekt OBJ ist hierbei ein Referenzdatensatz REF mit einem wahren Referenz-Objektfingerabdruck abrufbar. Ferner ist die Durchführungseinrichtung 116 ausgebildet, um Vergleichsdaten 117, die ein Ergebnis des Vergleichs repräsentieren, an die Bereitstellungseinrichtung 118 weiterzugeben. Die Bereitstellungseinrichtung 118 ist ausgebildet, um in Abhängigkeit von den Vergleichsdaten 117 bzw. in Abhängigkeit von einem Ergebnis des mittels der Durchführungseinrichtung 116 durchgeführten Vergleichs Ergebnisdaten 119 zum Verifizieren der Echtheit des Objekts OBJ bereitzustellen. Dabei ist die Bereitstellungseinrichtung 118 ausgebildet, um die Ergebnisdaten 119 abhängig von einer Übereinstimmung zwischen den Verifizierungsdaten 115 mit einem Referenzdatensatz REF bereitzustellen.

Gemäß einem erweiterten Ausführungsbeispiel ist die Verarbeitungseinrichtung 114 ausgebildet, um den Prüf-Objektfingerabdruck mit zumindest einem Teil eines dem Objekt OBJ eindeutig zugeordneten Identifikationscodes XYZ zu kombinieren, um den zumindest einen Teil des Identifikationscodes XYZ zu den Verifizierungsdaten 115 hinzuzufügen. Dabei ist die Einleseeinrichtung 112 ausgebildet, um den zumindest einen Teil des Identifikationscodes XYZ ansprechend auf eine Benutzereingabe in Gestalt eines Eingabesignals 107 von der Benutzerschnittstelle 106 einzulesen. Zusätzlich oder alternativ dazu ist Verarbeitungseinrichtung 114 ausgebildet, um den zumindest einen Teil des Identifikationscodes XYZ unter Verwendung der Bilddaten 103 zu erkennen.

Gemäß dem erweiterten Ausführungsbeispiel ist ferner die Durchführungseinrichtung 116 ausgebildet, um einen Vergleich des Prüf-Objektfingerabdrucks mit zumindest einem Referenz-Objektfingerabdruck durchzuführen. Hierbei ist für jedes vorab als echt bestätigte Objekt ein Referenzdatensatz REF mit einem wahren Referenz-Objektfingerabdruck und einem wahren Identifikationscode abrufbar. Die Durchführungseinrichtung 116 ist hierbei ausgebildet, um für den Vergleich den zumindest einen Referenz-Objektfingerabdruck abhängig von dem zumindest einen Teil des Identifikationscodes XYZ auszuwählen. Auch ist die Durchführungseinrichtung 116 dabei ausgebildet, um Vergleichsdaten 117, die ein Ergebnis des Vergleichs repräsentieren, an die Bereitstellungseinrichtung 118 weiterzugeben. Insbesondere ist hierbei die Verarbeitungseinrichtung 114 ausgebildet, um den Prüf-Objektfingerabdruck mit einem Teil des Identifikationscodes XYZ zu kombinieren, und ist die Bereitstellungseinrichtung 118 ausgebildet, um Ergebnisdaten 119 bereitzustellen, die den vollständigen Identifikationscode XYZ umfassen.

Gemäß einem Ausführungsbeispiel ist die Durchführungseinrichtung 116 ausgebildet, um den Prüf-Objektfingerabdruck zu verwenden, um den mit demselben übereinstimmenden Referenz-Objektfingerabdruck des Referenzdatensatzes REF zu aktualisieren. Zusätzlich oder alternativ ist die Durchführungseinrichtung 116 ausgebildet, um den Prüf-Objektfingerabdruck zu verwenden, um eine Zustandsbewertung des Objekts OBJ vorzunehmen. Hierbei ist die Bereitstellungseinrichtung 118 ausgebildet, um Ergebnisdaten 119 bereitzustellen, welche die Zustandsbewertung umfassen.

Insbesondere ist die Durchführungseinrichtung 116 ausgebildet, um beim Durchführen des Vergleichs Signaturwerte des Prüf-Objektfingerabdrucks mit Signaturwerten eines Referenz-Objektfingerabdrucks zu vergleichen, um eine Korrespondenz zwischen dem Prüf-Objektfingerabdruck und einem mit demselben übereinstimmenden Referenz-Objektfingerabdruck zu finden. Dabei ist die Durchführungseinrichtung 116 ausgebildet, um die Korrespondenz unter Verwendung einer Nachschlagtabelle und eines Abstimmungsbildes zu finden. Für die Nachschlagtabelle dienen Signaturwerte als Adressen. Zusätzlich oder alternativ umfasst die Nachschlagtabelle für jeden eingetragenen Signaturwert einen örtlichen Versatz einer Pixelposition eines Bezugspixels des Signaturwerts relativ zu einer Referenzposition. Für das Abstimmungsbild werden Stimmgewichte für die Referenzposition unter Verwendung der Nachschlagtabelle abgegeben und optional zusätzlich wird das Abstimmungsbild gefiltert, um ein globales Maximum in dem Abstimmungsbild als die Referenzposition zu identifizieren. Ein globales Maximum entspricht hierbei einer gefundenen Korrespondenz.

Gemäß einem Ausführungsbeispiel ist die Einleseeinrichtung 112 ausgebildet, um Bilddaten 103 einzulesen, die mindestens eine Aufnahme des zumindest einen Teilabschnitts des Objekts OBJ repräsentieren. Die mindestens eine Aufnahme ist unter Verwendung zumindest einer für die Aufnahme vordefinierten Beleuchtungseinstellung erstellt. Die Beleuchtung kann je nach Objektbeschaffenheit bedeutsam sein. Besonders bei einfarbigen Oberflächen kann flach seitlich einfallendes Licht geeignet sein, um aus einer Oberflächenstruktur Helligkeitsunterschiede und damit Information zu extrahieren. Bei gut texturierten Oberflächen, z. B. schwarz-weißer Marmor, ist dagegen eine Anordnung einer Lichtquelle weniger wichtig. Die Lichtquelle kann als ein Teil des Gerätes 100 oder getrennt von dem Gerät 100 ausgeführt sein. Auch kann z.B. die Sonne als Lichtquelle geeignet sein.

Die Benutzerschnittstelle 106 ist ausgebildet, um unter Verwendung der Ergebnisdaten 119 eine Signalisierung hinsichtlich der Verifizierung der Echtheit des Objekts OBJ an einen Benutzer und/oder eine andere Einrichtung oder Vorrichtung zu bewirken.

Fig. 2 zeigt ein Ablaufdiagramm eines Ausführungsbeispiels eines Verfahrens 200 zum Verifizieren einer Echtheit eines Objekts. Dabei ist das Verfahren 200 zum Verifizieren unter Verwendung der Vorrichtung aus Fig. 1 oder einer ähnlichen Vorrichtung und/oder in Verbindung mit dem Gerät aus Fig. 1 oder einem ähnlichen Gerät ausführbar. Anders ausgedrückt ist die Vorrichtung aus Fig. 1 oder eine ähnliche Vorrichtung eingerichtet, um die Schritte des Verfahrens in entsprechenden Einheiten auszuführen und/oder anzusteuern. Das Objekt umfasst optisch erkennbare, für das Objekt einzigartige Zufallsmerkmale. Das Verfahren 200 umfasst einen Schritt 210 des Einlesens und einen Schritt 220 des Verarbeitens. Optional zusätzlich umfasst das Verfahren 200 auch einen Schritt 230 des Durchführens und einen Schritt 240 des Bereitstellens.

In dem Schritt 210 des Einlesens werden Bilddaten, die zumindest einen Teilabschnitt des Objekts repräsentieren, von einer Schnittstelle zu einer Bildaufnahmeeinrichtung des Gerätes zur Objektbeurteilung eingelesen. Bevorzugt weist der zumindest eine Teilabschnitt des Objekts die optisch erkennbaren, für das Objekt einzigartigen Zufallsmerkmale auf. Nachfolgend werden in dem Schritt 220 des Verarbeitens die Bilddaten unter Verwendung einer Verarbeitungsvorschrift, gemäß der eine Mehrzahl von Signaturwerten für eine Mehrzahl von Pixeln einer Bildregion der Bilddaten bestimmt wird, verarbeitet, um einen Prüf-Objektfingerabdruck des Objekts als Verifizierungsdaten zum Verifizieren für einen Vergleich mit einem Referenz-Objektfingerabdruck zu generieren.

Gemäß einem Ausführungsbeispiel wird in dem Schritt 230 des Durchführens ein Vergleich des Prüf-Objektfingerabdrucks mit zumindest einem Referenz-Objektfingerabdruck durchgeführt. Hierbei ist für jedes vorab als echt bestätigte Objekt ein Referenzdatensatz mit einem wahren Referenz-Objektfingerabdruck abrufbar. In dem Schritt 240 des Bereitstellens werden in Abhängigkeit von einem Ergebnis des im Schritt des Durchführens durchgeführten Vergleichs Ergebnisdaten zum Verifizieren der Echtheit des Objekts bereitgestellt. Die Ergebnisdaten werden abhängig von einer Übereinstimmung zwischen den Verifizierungsdaten mit einem Referenzdatensatz bereitgestellt.

Gemäß einem anderen Ausführungsbeispiel wird im Schritt 220 des Verarbeitens der Prüf-Objektfingerabdruck mit zumindest einem Teil eines dem Objekt eindeutig zugeordneten Identifikationscodes kombiniert, um den zumindest einen Teil des Identifikationscodes zu den Verifizierungsdaten hinzuzufügen. Hierbei wird in dem Schritt 230 des Durchführens ein Vergleich des Prüf-Objektfingerabdrucks mit zumindest einem Referenz-Objektfingerabdruck durchgeführt. Hierbei ist für jedes vorab als echt bestätigte Objekt ein Referenzdatensatz mit einem wahren Referenz-Objektfingerabdruck und einem wahren Identifikationscode abrufbar. Für den Vergleich wird der zumindest eine Referenz-Objektfingerabdruck abhängig von dem zumindest einen Teil des Identifikationscodes ausgewählt. In dem Schritt 240 des Bereitstellens werden in Abhängigkeit von einem Ergebnis des im Schritt des Durchführens durchgeführten Vergleichs Ergebnisdaten zum Verifizieren der Echtheit des Objekts bereitgestellt. Dabei werden die Ergebnisdaten abhängig von einer Übereinstimmung zwischen den Verifizierungsdaten mit einem Referenzdatensatz bereitgestellt.

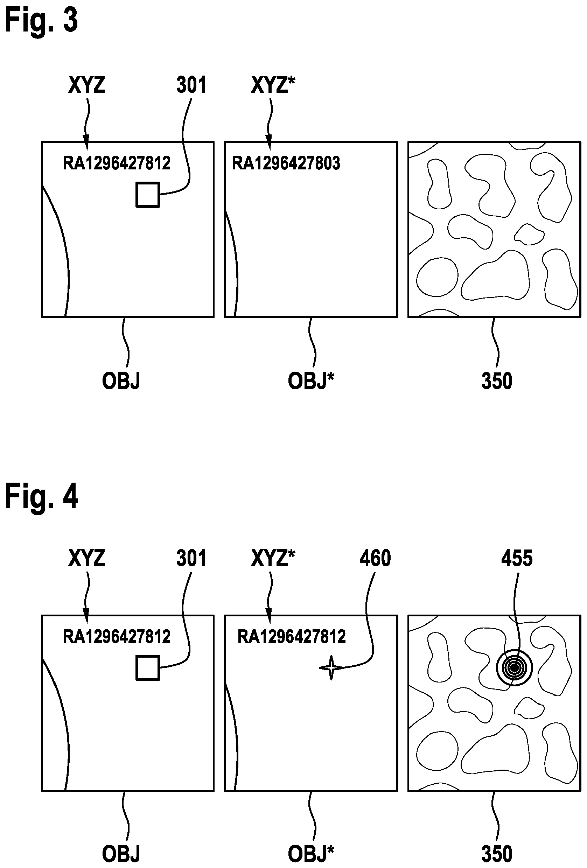

Fig. 3 zeigt eine schematische Darstellung eines Objekts OBJ mit einem Teilabschnitt 301, eines als echt bestätigten Objekts OBJ* und eines Abstimmungsbilds 350 in Zusammenhang mit der Vorrichtung aus Fig. 1 und/oder mit dem Verfahren aus Fig. 2. Hierbei sind das Objekt OBJ, das als echt bestätigte Objekt OBJ* und das Abstimmungsbild 350 jeweils als Bilder in einer Nebeneinanderstellung gezeigt. Bei dem Objekt OBJ wie auch dem als echt bestätigten Objekt OBJ* handelt es sich gemäß dem hier dargestellten Ausführungsbeispiel um einen Geldschein, wobei in der Darstellung von Fig. 3 von dem Objekt OBJ und dem als echt bestätigten Objekt OBJ* jeweils nur ein für das Verifizieren relevanter Teil gezeigt ist. Der Teilabschnitt 301 des Objekts OBJ ist hierbei durch die Bilddaten repräsentiert. Das als echt bestätigte Objekt OBJ* wird für den Vergleich der Objektfingerabdrücke verwendet. Eine Struktur des Substrats der Objekte OBJ und OBJ* umfasst und/oder repräsentiert die optisch erkennbaren, für das Objekt OBJ und OBJ* einzigartigen Zufallsmerkmale. Das Abstimmungsbild 350 wird bei dem Vergleich genutzt.

Wie es in Fig. 3 zu erkennen ist, gibt es bei dem Vergleich zwischen dem Objekt OBJ und dem als echt bestätigten Objekt OBJ* als Vergleichskandidaten keine Übereinstimmung, was auch anhand des dem Objekt OBJ eindeutig zugeordneten Identifikationscodes XYZ und eines dem als echt bestätigten Objekt OBJ* eindeutig zugeordneten weiteren Identifikationscodes XYZ* ersichtlich ist, die sich voneinander unterscheiden. Der Identifikationscode XYZ umfasst lediglich beispielhaft eine Seriennummer RA1296427812, wobei der weitere Identifikationscode XYZ* eine Seriennummer RA1296427803 umfasst. Somit ergibt sich im Abstimmungsbild 350 kein eindeutiger bzw. ausgezeichneter Häufungspunkt bzw. kein globales Maximum.

Fig. 4 zeigt eine schematische Darstellung eines Objekts OBJ mit einem Teilabschnitt 301, eines als echt bestätigten Objekts OBJ* und eines Abstimmungsbilds 350 in Zusammenhang mit der Vorrichtung aus Fig. 1 und/oder mit dem Verfahren aus Fig. 2. Die Darstellung in Fig. 4 entspricht hierbei der Darstellung aus Fig. 3 mit Ausnahme dessen, dass ein anderer Vergleichskandidat als das als echt bestätigte Objekt OBJ* gezeigt ist, wobei es bei dem Vergleich zwischen dem Objekt OBJ und dem als echt bestätigten Objekt OBJ* als Vergleichskandidaten eine Übereinstimmung gibt, wobei auch der Identifikationscode XYZ und der weitere Identifikationscodes XYZ* übereinstimmen, sodass sich im Abstimmungsbild 350 ein eindeutiger bzw. ausgezeichneter Häufungspunkt bzw. ein globales Maximum 455 ergibt. Eine Position 460 dieses globalen Maximums 455 in dem Abstimmungsbild 350 ist auch auf der Darstellung des als echt bestätigten Objekts OBJ* durch eine Markierung veranschaulicht. Die Position 460 dieses Häufungspunkts bzw. globalen Maximums 455 auf dem Geldschein korrespondiert mit einer gewählten Referenzposition auf demselben, aber zu einem anderen Zeitpunkt aufgenommenen Schein.

Unter Bezugnahme auf die vorstehend beschriebenen Figuren werden nachfolgend Ausführungsbeispiele, Hintergründe von Ausführungsbeispielen sowie Vorteile vorgestellt und/oder mit anderen Worten zusammenfassend nochmals erläutert.

Eine vorteilhafte Besonderheit von Ausführungsbeispielen und auch der DE 10 2019 210 580 A1 liegt darin, dass das Verfahren 200 ohne Suche auskommt, wodurch es gegenüber bisherigen Lösungen äußerst effizient ist. Zudem ist es äußerst zuverlässig. Statt eine Suche durchzuführen, bei der Deskriptor-Signaturwerte auf Ähnlichkeit zu vergleichen wären, wird auch bei der DE 10 2019 210 580 A1 Identität der Signaturwerte verlangt und die jeweilige Korrespondenz mit Hilfe einer Nachschlagtabelle bzw. Lookup-Tabelle gefunden, bei der die Signatur als Adresse dient. Bei der DE 10 2019 210 580 A1 wird der örtliche Bezug, nachfolgend auch Versatz genannt, zwischen jeweiliger Deskriptorposition und Referenzposition in einem ersten Bildbereich in einer Nachschlagtabelle bzw. Lookup-Tabelle gespeichert, und zwar an der dem Signaturwert entsprechenden Adresse. Ein Signaturwert in einem zweiten Bild führt zum Auslesen der Lookup-Tabelle an entsprechender Adresse. Der gespeicherte Versatz wird auf die aktuelle Position im zweiten Bild angewendet, z. B. addiert. An der dabei resultierenden Position wird eine Stimme abgegeben, die für die Lage der zu suchenden korrespondierenden Position abstimmt. Dieses Vorgehen, für eine Vielzahl von Deskriptoren im zweiten Bild, führt zu einer konzentrierten Häufung von Stimmen an der korrespondierenden Position, die in der Regel als Gewinner aus der Abstimmung hervorgeht. Damit ist im zweiten Bild die korrespondierende Position zur Referenzposition aus dem ersten Bild gefunden.

Bei einem Anwendungsbeispiel zur Demonstration des Konzepts aus der Patentanmeldung DE 10 2019 210 580 A1 wird beispielsweise ein Blatt Papier zweimal unabhängig fotografiert. Im ersten Bild wird eine Region markiert, die im zweiten Bild gesucht und zuverlässig gefunden wird, wenn es sich um dasselbe Blatt Papier handelt. Ein Abstimmungsbild weist in diesem Falle eine sehr starke und eindeutige Häufung auf, und zwar an der Stelle, die der Referenzposition der markierten Region entspricht. Würde es sich um ein anderes Blatt Papier handeln, wäre keine solche ausgezeichnete Häufung vorhanden. Somit ist es also möglich, ein bestimmtes Blatt Papier wiederzuerkennen, und zwar sehr zuverlässig und mit einem im Vergleich zu bisherigen Lösungen äußerst geringen Rechenaufwand. Die Anwendung ist nicht auf Papier beschränkt. Es wird hier lediglich beispielhaft verwendet. Gerade für Papier, das - zumindest für das Auge - keine markanten Merkmale aufweist, ist das Ergebnis aber beeindruckend, weil insbesondere für Laien so nicht erwartbar.

Insbesondere Banknoten werden heute mit einer Mehrzahl von Sicherheitsmerkmalen geschützt, um Fälschung zu erschweren. Es wird unterschieden zwischen sogenannten Level 1 Merkmalen, die vom Menschen direkt erkannt und ohne weitere Hilfsmittel überprüfbar sind, und Level 2 Merkmalen, die maschinenlesbar sind und z. B. in Zählgeräten der Bank oder in Geldautomaten oder in Prüfgeräten an Bargeldkassen verwendet werden. Weiterhin existieren maschinenlesbare Level 3 Merkmale mit höchsten Anforderungen für die Sicherheit der Echtheitserkennung, die von den Zentralbanken geheim gehalten werden.

Gemäß Ausführungsbeispielen ergeben sich einige starke und offensichtliche Vorteile gegenüber herkömmlichen Lösungen. Bisher existiert nichts Vergleichbares auf dem Markt. Es existiert also insbesondere z. B. keine Client-Server-basierte App, mit der ein Kunde bzw. Benutzer die Echtheit z. B. eines Geldscheins oder eines Medikaments oder anderen Objekts OBJ auf die hier beschriebene Weise oder ähnlich verifizieren kann. Bisher ist der Kunde auf die Level 1 Merkmale eines Geldscheins angewiesen, die er selbst ohne Hilfsmittel prüfen kann, oder auf die Level 2 Merkmale, die er mit einem handelsüblichen Prüfgerät prüfen kann. Er kann sich aber nicht zwangsläufig darauf verlassen, dass das Gerät eine z. B. sehr gute Fälschung erkennt. Er hat im Falle von Zweifeln an dem Gerät auch so gut wie keine Möglichkeit, dieses auf seine Zuverlässigkeit zu prüfen, da ihm kein Falschgeld zur Verfügung steht. Im Gegensatz dazu kann er beispielsweise die Korrektheit einer Client-Serverbasierten Anwendung gemäß einem Ausführungsbeispiel selbst überprüfen, wie noch erläutert wird.

Der Aufwand zur Ausrüstung von insbesondere Banknoten mit Sicherheitsmerkmalen wächst immer weiter. Das Vorgehen beruht stets auf der Annahme, dass die Banknotendruckereien den Fälschern technologisch überlegen bzw. voraus sind. Dies führt dazu, dass immer mehr Sicherheitsmerkmale hinzukommen. Dies steigert einerseits die Kosten. Andererseits führt es dazu, dass der Nutzer die Übersicht über die Merkmale verlieren kann - vermutlich wenige Laien kennen alle zurzeit verwendeten Merkmale genau genug, um sie im Zweifelsfall zur Überprüfung souverän einsetzen zu können. In dem Moment, wo ein Geldschein von Hand zu Hand übergeben wird, ist es für den Empfänger im Zweifelsfall, z. B. bei einer guten Fälschung, äußerst schwierig, eine klare Ja/Nein-Entscheidung zu treffen. Es entsteht Unsicherheit. Außerdem kann der Geber eine andere Auffassung vertreten, was zu einem schwer auflösbaren Streit führen kann. Hier ist gemäß einem Ausführungsbeispiel für beide Seiten eine Möglichkeit zur Abfrage möglich, die Klarheit schafft. Wenn die Abfrage bei Bedarf von beiden Parteien unabhängig durchgeführt werden kann und zum selben Ergebnis kommt, schafft dies zusätzliche Klarheit und Vertrauen.

Das Konzept gemäß Ausführungsbeispielen ist auch auf Objekte OBJ anwendbar, die sich bereits im Umlauf befinden, ohne dass diese verändert zu werden brauchen. Dies ist z. B. für Banknoten sehr interessant, denn so können die bereits im Umlauf befindlichen Zahlungsmittel nachträglich fälschungssicher identifizierbar gemacht werden. Hierfür brauchen sie lediglich einmal bei einer Institution vorbeizukommen, die entsprechend befugt und ausgerüstet ist. Dazu reicht beispielsweise der normale Bargeldumlauf aus. Für alle so erfassten Banknoten wird eine Zuordnung von Seriennummer bzw. Identifikationscode und Objektfingerabdruck beispielsweise serverseitig gespeichert. Ein im Sparstrumpf auf lange Zeit gehorteter Geldschein wird zwar so nicht erfasst, d.h. zu seiner Seriennummer ist der Objektfingerabdruck noch nicht bekannt, jedoch stellt dies kein Problem dar. Bei der Echtheitsprüfung kann dieser Status zurückgemeldet werden. Dem Kunden kann z. B. empfohlen werden, den Geldschein zu einer Bank zu bringen. Kommt das Objekt OBJ bzw. der Geldschein erneut bei der Institution vorbei, kann der Objektfingerabdruck erneut erfasst bzw. aktualisiert werden. Dies ist insbesondere dann sinnvoll, wenn das Objekt OBJ sich mit der Zeit verändert, z. B. altert oder abnutzt oder verschmutzt. Auf diese Weise könnten auch teure klassische Sicherheitsmerkmale verzichtbar werden. Die Herstellung bzw. Ausstattung von Banknoten, Verpackungen von Medikamenten, usw. könnte somit einfacher und damit kostengünstiger werden.

Das Verfahren 200 zum Verifizieren bzw. für die Echtheitsprüfung ist skalierbar. Das bedeutet beispielsweise, dass nur ein Teil der Seriennummer bzw. des Identifikationscodes vom Client an den Server übermittelt wird, sodass eine Mehrdeutigkeit gegeben ist. Serverseitig wird diese Mehrdeutigkeit anhand des Referenz-Objektfingerabdrucks aufgelöst. Den bisher nicht ausgetauschten Rest der Seriennummer sendet der Server dann an den Client zurück, um dort Vertrauen zu schaffen. Der Client entscheidet nach eigenem Ermessen, wie viel und welchen Teil der Seriennummer er weglässt. Je mehr er weglässt, umso größer ist die Sicherheit vor einer zufällig richtigen Antwort oder vor einer Falschantwort durch einen betrügerischen Dienst. Der Client kann auch ein Mensch sein, der ein gewöhnliches Smartphone mit Kamera nutzt.

Die Skalierbarkeit des Konzeptes gemäß einem Ausführungsbeispiel bietet beispielsweise die Möglichkeit, höheres Vertrauen auf Kosten eines höheren Aufwands zu liefern, der dem Kunden entsprechend in Rechnung gestellt werden kann. Lässt man beispielsweise drei numerische Stellen der Seriennummer eines Geldscheins weg und nimmt man an, dass für diese drei Stellen die Seriennummern lückenlos vergeben sind, dann existieren 1000 Scheine, auf die der Rest der Seriennummer passen kann. Mit anderen Worten gibt es 1000 gleichberechtigte Möglichkeiten für die unbekannten Stellen. Ein Server braucht also nur diese 1000 Möglichkeiten zu überprüfen. Beim Weglassen von Buchstaben ist die Zahl der Möglichkeiten natürlich höher als beim Weglassen von Ziffern, da es nur 10 unterschiedliche Ziffern, aber mehr als 10 unterschiedliche Buchstaben gibt. Nach erfolgreicher Verifikation liefert der Server die drei Stellen an den Client zurück, die dieser dann prüfen kann. Die Wahrscheinlichkeit, die 3 Stellen richtig zu erraten, beträgt lediglich 1/1000. Die Wahrscheinlichkeit, 2 Stellen richtig zu erraten, beträgt 1/100. Die Wahrscheinlichkeit für das richtige Erraten verhält sich also umgekehrt proportional zum Server-seitigen Aufwand für die Durchführung der Vergleiche. Den Aufwand kann sich der Betreiber bezahlen lassen und verschiedene Modi anbieten, zum Beispiel: Die Überprüfung bei Angabe der vollständigen Seriennummer wird kostenlos angeboten, sofern der Client solche Anfragen nicht massenhaft stellt. Die Überprüfung bei Weglassen von 3 Stellen kostet beispielsweise 0,1 Cent. Die Überprüfung bei Weglassen von 6 Stellen (1000-facher Aufwand gegenüber 3 Stellen) kostet beispielsweise 1 Euro. Der Kunde hat, neben dem Weglassen von Teilen der Seriennummer, noch eine weitere Möglichkeit, das Verifizieren zu prüfen, z. B. wenn er an der Integrität zweifelt. Und zwar kann er eine Seriennummer ganz oder teilweise von einem ersten Schein und einen Objektfingerabdruck von einem zweiten Schein mit abweichender Seriennummer für die Anfrage verwenden. Der Server wird dann eine Falschgeldmeldung zurückliefern.

Insbesondere wenn für die Bildung von Objektfingerabdrücken das auch aus der Patentanmeldung DE 10 2019 210 580 A1 bekannte Vorgehen verwendet wird, ergibt sich der Vorteil, dass sich die Echtheitsprüfung robust gegenüber Störungen verhält. Das bedeutet beispielsweise, dass sich das zu prüfende Objekt OBJ zwischenzeitlich, zum Beispiel seit der letzten offiziellen Erfassung, verändert haben darf, z. B. durch Abnutzung, Alterung, Verschmutzung, Knittern oder Falten, insbesondere bei Papier, oder dass die Aufnahmetechnik beim Client (Kamera und Beleuchtung) bzw. der Bildaufnahmeeinrichtung 102 andere Eigenschaften hat als die Aufnahmetechnik beispielsweise bei einer vorhergehenden offiziellen Erfassung. Diese Robustheit gegenüber Störungen beruht auf dem Voting-Ansatz bzw. Abstimmungsansatz mit beispielsweise dem Abstimmungsbild 350. Ist z. B. ein Anteil der bei der für die Prüfung relevanten Fläche auf der Banknote beschädigt, z. B. durch Knicken, Verschmutzung oder dergleichen, so trägt dieser nicht mehr zur Bildung des ausgezeichneten Häufungspunkts bei, sondern nur der nicht oder weniger beschädigte Rest der Fläche. Der Häufungspunkt wird dadurch lediglich in seiner Stärke bzw. der Stimmgewichtssumme etwa gemäß des beschädigten Flächenanteils reduziert, bleibt aber weiterhin dominant und hinreichend eindeutig. Beschädigungen von weit mehr als der Hälfte der Fläche sind dadurch tolerabel.

Insbesondere wenn für die Bildung des Objektfingerabdrucks die auch aus der Patentanmeldung DE 10 2019 210 580 A1 bekannte Vorgehensweise verwendet wird, kann in den allermeisten denkbaren Fällen eine klare Antwort an den Client zurückgemeldet werden, wie folgt: Falls der Geldschein echt ist, wird bei der Überprüfung von z. B. 1000 Kandidaten genau einmal ein ausgezeichneter Häufungspunkt bzw. ein globales Maximum 455 gefunden. Dem Client wird eine positive Bestätigung (Schein ist echt) und ggf. die z. B. 3 fehlenden Stellen der Seriennummer mit den Ergebnisdaten 119 geliefert. Falls der Geldschein gefälscht ist, wird kein ausgezeichneter Häufungspunkt gefunden. Dem Client wird eine negative Bestätigung (Schein ist gefälscht, bzw. Seriennummer stimmt nicht überein) mit den Ergebnisdaten 119 geliefert. Falls die Seriennummer nicht existiert, wird dem Client dies mit den Ergebnisdaten 119 gemeldet. Es muss sich um eine Fälschung handeln, falls dem Server alle im Umlauf befindlichen Seriennummern bekannt sind. Falls die Seriennummer existiert, aber der Objektfingerabdruck noch unbekannt ist, wird dem Client mit den Ergebnisdaten 119 gemeldet, dass die Überprüfung nicht durchgeführt werden kann, bzw. von einer Bank durchgeführt werden soll, damit dort z. B. mit einer Level 3 Methode geprüft und ggf. der Objektfingerabdruck erstmalig offiziell erfasst wird. Falls der Geldschein so stark beschädigt ist, dass der Häufungspunkt eine Mindestschwelle unterschreitet, wird dem Client mit den Ergebnisdaten 119 gemeldet, dass die Prüfung unter Vorbehalt positiv war und dass der Geldschein bei einer Bank eingetauscht werden sollte. Es kann noch der Fall eintreten, dass die Seriennummer unvollständig eingegeben wurde und es sich um einen noch nicht erfassten Schein handelt. In diesem Fall findet der Server keine Korrespondenz. Serverseitig ist jedoch bekannt, dass es unerfasste Scheine gibt und um wie viele und um welche Seriennummern es sich handelt. Es kann eine entsprechende Rückmeldung gegeben oder der Client aufgefordert werden, zur Klärung die vollständige Seriennummer bzw. den vollständigen Identifikationscode XYZ einzugeben.

Das Konzept gemäß Ausführungsbeispielen kann in Geräte 100 zur Objektbeurteilung wie Geldzählgeräte und Geldausgabegeräte und Terminals zur Bargeldzahlung und Prüfgeräte an Bargeldkassen integriert werden. So kann Falschgeld sicher erkannt und umgehend abgelehnt oder markiert oder eingezogen oder zerstört werden. Bei diesen Geräten 100 ist es sinnvoll, die Echtheitsprüfung mit automatischer Erkennung und Übermittlung der vollständigen Seriennummer durchzuführen, um den Suchaufwand gering zu halten. Das Ausräumen von Misstrauen (durch Weglassen von Stellen der Seriennummer) bzw. die Skalierbarkeit ist hier in der Regel nicht notwendig. Optional kann aus Anfragen an den Server, insbesondere nach positiver Verifikation, Zusatznutzen gezogen werden, zum Beispiel: Nutzung des vom Client gesendeten Prüf-Objektfingerabdrucks, zum Beispiel zur Aktualisierung des gespeicherten Referenz-Objektfingerabdrucks oder zur Bewertung des Alterungszustands. Sammeln von Daten über den Umlauf bzw. die Nutzung der Objekte OBJ. Eine skalierbare Echtheitsprüfung mit Client und Server und ihre Applizierbarkeit z. B. auf einem Smartphone und damit ihre Verfügbarkeit für Jedermann sind weitere Vorteile. Client und Server brauchen nicht getrennt zu sein. Sie können z. B. auch in derselben App in einem Endgerät realisiert sein.

Nachfolgend wird auch auf die optisch erkennbaren, für das Objekt OBJ einzigartigen Zufallsmerkmale bzw. unfälschbaren zufälligen Merkmale des Objekts OBJ eingegangen. Auch wenn hierin häufig auf Banknoten als Beispiele für Objekte OBJ Bezug genommen wird, sind diese nur als Ausführungsbeispiel zu betrachten, denn das Konzept gemäß Ausführungsbeispielen ist für viele Arten von Objekten OBJ einsetzbar. Bedingung hierfür ist, dass das Objekt OBJ möglichst nicht fälschbare zufällige Merkmale besitzt, die genutzt werden können. Diese sind idealerweise Ergebnisse eines Zufallsprozesses, der zwar gesteuert werden kann, aber nach menschlichem Ermessen niemals so, dass zwei Objekte OBJ mit identischen Merkmalen herauskommen. Im Falle von Geldscheinen ist hier das Papier zu nennen, genauer das sogenannte Substrat, auf das der Geldschein gedruckt wird. Hier liegt der Zufall in der Anordnung der meist baumwollhaltigen Fasern im Substrat. Ebenso zufällig ist die Lage der Melierfasern im Substrat. Dabei handelt es sich um beigemischte eingefärbte Fasern, die unter UV-Licht in verschiedenen Farben leuchten. Bei Papier oder Karton für gewöhnliche Dokumente oder Verpackungen liegt der nutzbare Zufall in der Anordnung der Zellstofffasern. Bei Filz oder Naturmatten liegt der nutzbare Zufall in der Anordnung und Farbe der Fasern. Bei einer Metallic-Lackoberfläche liegt der nutzbare Zufall in der Anordnung und Ausrichtung der metallisch reflektierenden Partikel. Bei einem Sandstein liegt der nutzbare Zufall in der Anordnung und Zusammensetzung der Sandkörner in der Oberfläche. Bei einem Marmorstein liegt der nutzbare Zufall in seiner Textur. Bei einer Holzoberfläche liegt der nutzbare Zufall in der Holzmaserung. Bei einer einzelnen Tablette (z. B. ein sehr teures Medikament) liegt der nutzbare Zufall in der Struktur der kristallinen Oberfläche. Bei einer Lederoberfläche oder bei lebender Haut liegt der nutzbare Zufall in der Anordnung der Falten und Poren bzw. Haarwurzeln. Ähnlich ist es auch bei der Schale einer Frucht oder der Haut oder dem Panzer eines Tieres. Bei einem Kunstwerk, z. B. einem Gemälde, liegt der nutzbare Zufall in der Feinstruktur der Fasern auf der Rückseite der Leinwand. Diese Liste könnte beliebig fortgesetzt werden. Wichtig ist dabei, dass das Material wenigstens eine Merkmaleigenschaft mit sich bringt, die aus dem Zufall resultiert, nicht vollständig nachahmbar ist und hinreichende Eindeutigkeit bietet. Bei allen genannten Beispielen ist dies der Fall. Beispielsweise bietet ein einige Quadratmillimeter großes Stück Papier bzw. Substrat eine so große Eindeutigkeit, dass eine Verwechslung mit einem zweiten Stück sicher ausgeschlossen werden kann. Zwar könnte in manchen Fällen der Versuch einer Fälschung unternommen werden, z. B. durch künstliche Nachahmung einer natürlichen Faser-Oberfläche per Fotodruck. Jedoch ist ein solcher Fälschungsversuch fast immer sehr einfach zu entlarven oder zu umgehen, z. B. indem für die Bildung des Objektfingerabdrucks die Oberflächenstruktur stets zweimal fotografiert wird, einmal mit Beleuchtung von links, einmal von rechts - während die Fälschung nur eine Beleuchtungsrichtung wiedergeben könnte.

Die Bildung des Objektfingerabdrucks bedeutet, dass das oder die nicht fälschbare(n) zufällige Merkmal(e) in eine digitale Repräsentation umgesetzt wird (werden). Dieser Objektfingerabdruck ist im Allgemeinen nicht eindeutig reproduzierbar. Dies ist vielleicht zunächst überraschend, aber einleuchtend, wenn man bedenkt, dass das zu prüfende Objekt OBJ einmal neu und einmal verschmutzt oder beschädigt ist, oder dass derselbe beispielsweise einmal von einer teuren Kamera in einem Spezialgerät fotografiert wird und einmal von einer Smartphone-Kamera. Entscheidend ist, dass der gebildete Objektfingerabdruck bei der Echtheitsprüfung eine hinreichend sichere Entscheidung zulässt. Als Ausführungsbeispiel wird nachfolgend die Bildung des Objektfingerabdrucks wie gemäß der Patentanmeldung DE 10 2019 210 580 A1 durchgeführt (ohne Beschränkung der Allgemeinheit). Dazu wird das Objekt OBJ oder ein Teil davon von einer Kamera bzw. Bildaufnahmeeinrichtung 102 fotografiert. Besonders günstig ist es, einen vorbestimmten Teil des Objekts zu fotografieren, an dem der nutzbare Zufall besonders gut sichtbar ist. Hierbei ist von Vorteil, den Abstand so zu wählen, dass der nutzbare Zufall gut sichtbar wird. Häufig ist ein geringer Abstand günstig (z. B. bei Papiertextur), um die Details erfassen zu können. Ebenfalls ist es günstig, die Beleuchtung geeignet zu wählen, beispielsweise so, dass das Licht von einer Seite einfällt. Da bei einem Smartphone in der Regel die Beleuchtung (LED) fest verbaut ist, kann es nötig sein, das Smartphone bzw. das Objekt OBJ entsprechend auszurichten. Alternativ können Server-seitig mehrere Referenz-Objektfingerabdrücke mit Beleuchtung aus unterschiedlichen Richtungen vorgehalten werden. Seitliche Beleuchtung kann bei untexturierten aber strukturierten Oberflächen vorteilhaft sein. Bei gut texturierten Oberflächen (z. B. Holzmaserung oder Marmor) dagegen kann auch eine frontale Beleuchtung gut geeignet sein. Der gewählte Bildausschnitt wird nachfolgend verarbeitet. Aus dem Inhalt des Bildausschnitts wird eine Mehrzahl von Signaturwerten gebildet. Eine Signatur ist eine Bitfolge (die auch als Zahl aufgefasst werden kann), die den Bildinhalt der lokalen Umgebung um eine betrachtete Position, z. B. um das aktuelle Pixel, charakterisiert. Führt man diese Bildung mehrfach aus, z. B. für die Umgebung jedes Pixels, erhält man eine Mehrzahl von Signaturen. Jeder Signatur wird ein Versatz z. B. des zugehörigen zentralen Pixels zu einer gemeinsamen Referenzposition zugeordnet. Die Referenzposition kann z. B. die Bildausschnittmitte sein oder die Position eines markanten und eindeutigen Punkts auf dem Geldschein bzw. dem Objekt OBJ. Beispielsweise anhand einer Lookup-Tabelle werden die Versatze gespeichert, wobei die Signatur als Lookup-Adresse dienen kann. Vorschläge für den Umgang mit mehrdeutigen Signaturen sind auch in der Patentanmeldung DE 10 2019 210 580 A1 gegeben.

In dem vorgenannten Beispiel wird der Objektfingerabdruck also gebildet aus einer Aufnahme eines Teils des Objekts OBJ, die über eine Umwandlung des Bilds oder Bildausschnitts in Signaturen in eine Lookup-Tabelle dargestellt wurde, die für die jeweilige Signatur einen Versatz speichert. Es sind auch alternative Formen des Objektfingerabdrucks denkbar. Beispielsweise das Obengenannte in digital komprimierter Form oder als Vorstufe, z. B. als Bild(-Ausschnitt) von Signaturen. Ob die Verarbeitungsschritte für die Bildung des Prüf-Objektfingerabdrucks schon auf dem Client durchgeführt werden oder erst auf dem Server, ist irrelevant. Es ist von Vorteil, Server-seitig den Referenz-Objektfingerabdruck für eine größere Fläche vorzuhalten, während Client-seitig eine kleinere Fläche (Bildausschnitt) für den Prüf-Objektfingerabdruck erfasst wird. Das eröffnet dem Anwender die Möglichkeit, den Bildausschnitt selbst nach Belieben auszuwählen oder - um besonders sicher sein zu können bezüglich der Echtheit - mehrere Echtheitsprüfungen mit verschiedenen Bildausschnitten durchzuführen.

Gemäß einem Ausführungsbeispiel existiert eine vertrauenswürdige Einrichtung bzw. Organisation, die den Objektfingerabdruck erstellt und mit dem Referenzcode bzw. Identifikationscode XYZ bzw. XYZ* in Beziehung setzt und/oder das gespeicherte Paar als Referenzdatensatz REF bereithält und Anfragen zur Echtheitsprüfung beantwortet. Beide Aufgaben können auch getrennt sein. Zum Beispiel kann die Bildung des Objektfingerabdrucks in zertifizierten Maschinen stattfinden, die in Bankfilialen stehen, während die Anfragen von Servern der Zentralbank beantwortet werden. Die vertrauenswürdige Einrichtung könnte z. B. auch ein Hersteller von Originalersatzteilen sein, die beim Verpacken Ihrer Originalersatzteile den Objektfingerabdruck für den Karton erstellt und Anfragen zur Echtheit von Kunden selbst beantwortet. Die vertrauenswürdige Einrichtung könnte auch ein Hersteller von Medikamenten sein, der für die Packungen oder die Medizinpräparate selbst (insbesondere Tabletten) den Objektfingerabdruck erstellt und Anfragen von Apotheken, Ärzten, Medizinpersonal und Patienten zur Echtheit beantwortet. Die vertrauenswürdige Einrichtung könnte auch ein einzelnes Endgerät sein, das beim Verleihen und bei der Rückgabe oder Entgegennahme von Gegenständen oder Dokumenten zur Verifikation ihrer Echtheit eingesetzt wird. Zum Beispiel in einem Museum, das Kunstwerke an Ausstellungen verleiht, oder bei einem Versandhändler, der Rücksendungen abwickelt.

Nachfolgend wird schließlich noch der Ablauf der Echtheitsprüfung als ein Ausführungsbeispiel und lediglich beispielhaft beschrieben. Bei einem Einkauf auf einem Wochenmarkt gibt der Verkäufer dem Kunden als Rückgeld einen 50-Euro-Schein, der das Objekt OBJ darstellt und den der Kunde vorsichtshalber überprüfen möchte. Der Kunde nimmt sein Smartphone zur Hand und fotografiert oder filmt mit einer Echtheits-App den Schein. Die App erkennt die Lage des Scheins und dirigiert den Kunden beispielsweise so, dass die unbedruckte freie Fläche zwischen Seriennummer und Wasserzeichen auf der Rückseite des Scheins aufgenommen werden kann. Auf dieser unbedruckten Fläche ist die Struktur des Substrats besonders gut sichtbar. Die Aufnahme erfolgt aus kurzer Distanz und mit eingeschalteter (seitlicher) Beleuchtung. Der Anwender entscheidet beispielsweise selbst, ob er die Seriennummer mitfotografiert und ob die App diese automatisch erkennen soll oder ob er sie selbst eintippt. In diesem Falle tippt er sie selbst ein, bis auf die letzten drei Stellen, also zum Beispiel RA1296427***. Die App bildet aus der Aufnahme den Prüf-Objektfingerabdruck und übermittelt diesen zusammen dem eingetippten Teil der Seriennummer als Verifizierungsdaten 115 beispielsweise an einen Server. In diesem Ausführungsbeispiel ist der Prüf-Objektfingerabdruck als Bild von Signaturen repräsentiert, wobei darin pro Pixel eine Signatur gespeichert ist.

Der Server erkennt, dass passend zu der übertragenen unvollständigen Seriennummer 1000 Scheine im Umlauf sind, also die Seriennummern von RA1296427000 bis RA1296427999. Für 900 dieser Scheine sind die Objektfingerabdrücke in einer Datenbank bereits vorhanden und stehen für den Vergleich bereit. Für die restlichen 100 Scheine sind die Objektfingerabdrücke noch unbekannt, weil die Scheine beispielsweise seit Einführung der Echtheitsprüfung noch in keiner Bankfiliale wieder aufgetaucht sind. Sie schlummern beispielsweise in Sparstrümpfen und Tresoren. Es ist daher relativ unwahrscheinlich, dass der zu testende Schein zu diesen 100 unerfassten gehört. Der Server beginnt damit, für die 900 Kandidaten von vorab als echt bestätigten Objekten OBJ* einen Vergleich des jeweiligen Referenz-Objektfingerabdrucks mit dem vom Client gesendeten Prüf-Objektfingerabdruck durchzuführen. Das Vergleichen kann abgebrochen werden, sobald die Übereinstimmung gefunden ist.

Gemäß einem Ausführungsbeispiel und ähnlich oder entsprechend dem Konzept in der Patentanmeldung DE 10 2019 210 580 A1 kann der Vergleich etwa folgendermaßen ablaufen: Der Server lädt den nächsten Referenz-Objektfingerabdruck aus der Datenbank in den Arbeitsspeicher (und dekomprimiert ihn, falls nötig, zuvor). Der Referenz-Objektfingerabdruck kann als bereits befüllte Lookup-Tabelle vorliegen. Alternativ wird die Lookup-Tabelle nun befüllt, und zwar anhand des Referenzbilds von Signaturen aus der Datenbank. Die befüllte Lookup-Tabelle enthält Versätze bezüglich der Referenzposition. Nachfolgend kann der Vergleich durchgeführt werden: Für jede Signatur des Prüf-Objektfingerabdrucks oder eine Teilmenge davon wird ein lesender Zugriff auf die Lookup-Tabelle durchgeführt und der zur jeweiligen Signatur gespeicherte Versatz, falls vorhanden, ausgelesen, ansonsten zur nächsten Signatur fortgeschritten. Dieser Versatz wird auf die aktuelle Testbild-Pixelposition addiert. An der so resultierenden Position wird eine Stimme abgegeben, die für die Lage der zur Referenzposition korrespondierenden Position abstimmt. Diese Stimmen werden in dem Abstimmungsbild 350 gesammelt. Dabei korrespondieren die Koordinaten des Abstimmungsbilds 350 mit den Koordinaten des Test-Signaturbilds, können also ineinander überführt werden oder stimmen im einfachsten Falle identisch überein.

Für fast alle verglichenen Kandidaten ergibt sich bei der Abstimmung keine ausgezeichnete Häufung im Abstimmungsbild 350, sondern die Stimmen verteilen sich zufällig und mehr oder weniger gleichmäßig über die Fläche des Abstimmungsbilds, siehe das Beispiel in Fig. 3. Jedoch in einem Falle, nämlich beim gesuchten korrekten Kandidaten, bildet sich im Abstimmungsbild 350 ein sehr markanter und klar lokalisierter Häufungspunkt bzw. ein deutliches globales Maximum 455, siehe Fig. 4, z. B. optional und robust in einer gefilterten bzw. geglätteten Form des Abstimmungsbilds 350. Diese Häufung, z. B. gemessen als Gesamtgewicht über 2 × 2 unmittelbar benachbarte Bins des Abstimmungsbilds 350, die einen vorgegebenen Schwellwert überschreiten, zeigt an, dass der Referenz-Kandidat bzw. das vorab als echt bestätigte Objekt OBJ* und der Test-Kandidat bzw. das Objekt OBJ übereinstimmen. Die Suche kann an dieser Stelle abgebrochen werden und der Server kann dem Client die vollständige Seriennummer RA1296427812 oder die fehlenden 3 Stellen 812 mit den Ergebnisdaten 119 zurückmelden.

Dem Kunden wird beispielsweise auf seinem Smartphone angezeigt, dass der untersuchte Schein echt ist und wie der Rest der Seriennummer lautet. Da der Kunde bisher die restlichen 3 Stellen nicht übermittelt hat, kann er sich sehr sicher sein, dass er von der App bzw. vom Server nicht betrogen wurde, denn auch dieser Missbrauchsfall (gehackte App bzw. betrügerischer Server) wäre denkbar. Im vorgenannten Ausführungsbeispiel wird der Referenz-Objektfingerabdruck zum Schreiben der Lookup-Tabelle verwendet und der Prüf-Objektfingerabdruck zum Lesen. In einem alternativen Ausführungsbeispiel kann die Reihenfolge auch umgekehrt werden, wobei beide Ausführungsformen etwa gleichwertig sind. In der Patentanmeldung DE 10 2019 210 580 A1 werden auch Vorschläge zu nicht konstanten Stimmgewichten gemacht, die hier vorteilhaft anwendbar sind. Es sind auch andere Möglichkeiten zur Durchführung des Vergleichs zwischen Test- und Referenzaufnahme denkbar.

Es ist von Vorteil, wenn sich das Objekt OBJ bei der Bildaufnahme unter einer vorgesehenen Entfernung und Ausrichtung bezüglich der Kamera bzw. Bildaufnahmeeinrichtung 102 befindet. Die vorgesehene Entfernung und Ausrichtung ist idealerweise so gewählt, dass im Falle der Objektübereinstimmung bei der Anwendung der Versätze auf die Signaturpositionen die Häufung der Stimmgewichte möglichst hoch wird. Beispielsweise bei einem Gerät zur Prüfung von Geldscheinen kann dies per mechanischer Anordnung leicht erreicht werden, z. B. indem ein Geldeinzug verwendet wird, der den Geldschein ausgerichtet und in vorgesehenem Abstand der Kamera zuführt. Bei handgehaltener Anordnung, z. B. mit einer Smartphone-Kamera, wäre dies weniger praktikabel. Stattdessen kann das aufgenommene Bild z. B. mit einer Homographie-Abbildung so transformiert werden, dass es einer Aufnahme aus vorgesehener Entfernung und Ausrichtung möglichst nahekommt. Dazu kann sich ein geeigneter Algorithmus vorhandene Merkmale auf dem Geldschein zunutze machen, beispielsweise die bekannte Bedruckung, um aus ihrer Größe, Orientierung und/oder Verzerrung die Parameter der notwendigen Homographie-Abbildung zu errechnen.

Wenn beide vorgenannten Möglichkeiten nicht zur Verfügung stehen, besteht die Gefahr, dass sich die gewünschte Häufung im Abstimmungsbild 350 nicht ausbilden kann. Hierzu stelle man sich vor, dass der Abstand zwischen Objekt OBJ und Kamera bzw. Bildaufnahmeeinrichtung 102 etwas zu gering sei, was zu einem etwas vergrößerten Abbild der Textur im Teilabschnitt 301 führt. Dies wiederum führt dazu, dass bei der Anwendung der Versätze auf die Signaturpositionen die Versätze etwas zu kurz sind, sich also nicht mehr an einer zentralen Stelle anhäufen, sondern in der nahen Umgebung dieser Stelle. Mit anderen Worten läuft die Häufung etwas auseinander. Dann bietet sich hier als dritte Möglichkeit an, dieses Auseinanderlaufen automatisiert festzustellen und zu kompensieren. Dies ist beispielsweise möglich, indem zusätzlich zur Abstimmung auch eine differentielle Betrachtung der Abstimmung durchgeführt wird, also ermittelt wird, wie sich eine leichte Verkürzung bzw. Verlängerung aller Versatzvektoren auf die Höhe der Häufung auswirkt. Somit können alle Versatzvektoren in ihrer Länge so korrigiert werden, dass die Häufung maximiert wird, ggf. durch iteratives mehrfaches Anwenden der differentiellen Betrachtung.

Analog zur Anwendung der differentiellen Betrachtung bei der Kompensation der Entfernung kann diese auch bei der Kompensation der Ausrichtung angewandt werden. Denn beispielsweise eine leichte Verdrehung zwischen Objekt OBJ und Kamera bzw. Bildaufnahmeeinrichtung 102 um die Sichtachse könnte dazu führen, dass bei der Anwendung der Versätze auf die Signaturpositionen die Stimmgewichte nicht mehr auf ein gemeinsames Zentrum fallen, sondern sich um dieses herum verteilen. Unter Verwendung einer differentiellen Betrachtung mit leichter Variation der Verdrehung, ggf. iterativ, kann auch dieser Fehler wieder korrigiert werden. Analoge Überlegungen lassen sich auch auf die Verdrehungen, im Sinne von Verkippungen, um die beiden anderen Raumachsen anwenden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Verifizieren einer Echtheit eines Objekts, OBJ, wobei das Objekt, OBJ, optisch erkennbare, für das Objekt, OBJ, einzigartige Zufallsmerkmale aufweist, die dadurch bedingt sind, dass ein Material des Objekts, OBJ, wenigstens eine Merkmalseigenschaft aufweist, die aus dem Zufall bzw. aus einem Zufallsprozess bei dessen Herstellung resultiert, wobei das Verfahren (200) folgende Schritte aufweist:
Einlesen (210) von Bilddaten (103), die zumindest einen, insbesondere die optisch erkennbaren, für das Objekt, OBJ, einzigartigen Zufallsmerkmale aufweisenden, Teilabschnitt (301) des Objekts, OBJ, repräsentieren, von einer Schnittstelle (111) zu einer Bildaufnahmeeinrichtung (102) eines Gerätes (100) zur Objektbeurteilung; und
Verarbeiten (220) der Bilddaten (103) unter Verwendung einer Verarbeitungsvorschrift (113), gemäß der eine Mehrzahl von Signaturwerten für eine Mehrzahl von Pixeln einer Bildregion der Bilddaten bestimmt wird, um einen Prüf-Objektfingerabdruck des Objekts, OBJ, als Verifizierungsdaten (115) zum Verifizieren für einen Vergleich mit einem Referenz-Objektfingerabdruck zu generieren, wobei jeder der Signaturwerte unter Verwendung eines Deskriptors mit einer Mehrzahl von unterschiedlichen Filtern bestimmt wird, wobei der Deskriptor ausgebildet ist, um einen Bildinhalt in einer lokalen Umgebung um ein Pixel herum in einer kompakten Form zu beschreiben, wobei der Prüf-Objektfingerabdruck als Bild von Signaturwerten repräsentiert ist, wobei der Prüf-Objektfingerabdruck mit einem Teil eines dem Objekt, OBJ, eindeutig zugeordneten Identifikationscodes, XYZ, kombiniert wird, um den Teil des Identifikationscodes, XYZ, zu den Verifizierungsdaten (115) hinzuzufügen, wobei der Teil des Identifikationscodes, XYZ, ansprechend auf eine Benutzereingabe von einer Benutzerschnittstelle (106) des Gerätes (100) zur Objektbeurteilung eingelesen wird;
Durchführen (230) eines Vergleichs des Prüf-Objektfingerabdrucks mit zumindest einem Referenz-Objektfingerabdruck, wobei für jedes vorab als echt bestätigte Objekt, OBJ*, ein Referenzdatensatz, REF, mit einem wahren Referenz-Objektfingerabdruck und einem wahren Identifikationscode, XYZ*, abrufbar ist und wobei für den Vergleich der zumindest eine Referenz-Objektfingerabdruck, welcher mit dem Teil des Identifikationscodes, XYZ, verknüpft ist, verwendet wird; und
Bereitstellen (240) von Ergebnisdaten (119) zum Verifizieren der Echtheit des Objekts, OBJ, in Abhängigkeit von einem Ergebnis des im Schritt (230) des Durchführens durchgeführten Vergleichs, wobei die Ergebnisdaten (119) abhängig von einer Übereinstimmung zwischen den Verifizierungsdaten (115) mit einem Referenzdatensatz, REF, bereitgestellt werden und den vollständigen Identifikationscode, XYZ, umfassen, wobei die Ergebnisdaten (119) eine Verifizierungsinformation über die Echtheit des Objekts, OBJ, umfassen.

2. Verfahren (200) gemäß Anspruch 1, bei dem im Schritt (230) des Durchführens des Vergleichs Signaturwerte des Prüf-Objektfingerabdrucks mit Signaturwerten eines Referenz-Objektfingerabdrucks verglichen werden, um eine Korrespondenz zwischen dem Prüf-Objektfingerabdruck und einem mit demselben übereinstimmenden Referenz-Objektfingerabdruck zu finden, wobei die Korrespondenz unter Verwendung einer Nachschlagtabelle und eines Abstimmungsbildes (350) gefunden wird, wobei für die Nachschlagtabelle Signaturwerte als Adressen dienen und/oder wobei die Nachschlagtabelle für jeden eingetragenen Signaturwert einen örtlichen Versatz einer Pixelposition eines Bezugspixels des Signaturwerts relativ zu einer Referenzposition umfasst, wobei für das Abstimmungsbild (350) Stimmgewichte für die Referenzposition unter Verwendung der Nachschlagtabelle abgegeben werden, um ein globales Maximum (455) in dem Abstimmungsbild (350) als die Referenzposition zu identifizieren, wobei ein globales Maximum (455) einer gefundenen Korrespondenz entspricht.

3. Verfahren (200) gemäß Anspruch 2, bei dem das Abstimmungsbild (350) gefiltert wird, insbesondere unter Verwendung eines Glättungsfilters oder dergleichen.

4. Verfahren (200) gemäß einem der vorangegangenen Ansprüche, bei dem im Schritt (210) des Einlesens Bilddaten (103) eingelesen werden, die mindestens eine Aufnahme des zumindest einen Teilabschnitts (301) des Objekts, OBJ, repräsentieren, wobei die mindestens eine Aufnahme unter Verwendung zumindest einer für die Aufnahme vordefinierten Beleuchtungseinstellung erstellt ist.

5. Vorrichtung (110), umfassend Mittel (112, 114, 116, 118) zum Ausführen der Schritte des Verfahrens (200) gemäß einem der vorangegangenen Ansprüche.

6. Computerprogramm, umfassend Befehle, die bei der Ausführung des Programms durch einen Computer diesen veranlassen, die Schritte des Verfahrens (200) gemäß einem der Ansprüche 1 bis 4 auszuführen und/oder anzusteuern.

7. Maschinenlesbares Speichermedium, auf dem das Computerprogramm nach Anspruch 6 gespeichert ist.

8. Gerät (100) zur Objektbeurteilung, wobei das Gerät die Vorrichtung (110) gemäß Anspruch 5 aufweist, wobei das Gerät (100) die Bildaufnahmeeinrichtung (102) aufweist, wobei die Bildaufnahmeeinrichtung (102) und die Vorrichtung (110) datenübertragungsfähig miteinander verbunden sind.

## Claims

1. Method (200) for verifying the authenticity of an object, OBJ, wherein the object, OBJ, has unique random features which are optically identifiable, for the object, OBJ, and which are caused by the fact that a material of the object, OBJ, has at least one characteristic property, which results from the randomness or from a random process in its manufacture, wherein the method (200) comprises the following steps:
reading in (210) image data (103) representing at least one subsection (301) of the object, OBJ, in particular the subsection which is optically identifiable, for the object, OBJ, and has unique random features, from an interface (111) to an image receiving device (102) of a unit (100) for object assessment; and
processing (220) the image data (103) using a processing instruction (113), according to which a plurality of signature values for a plurality of pixels of an image region of the image data is determined in order to generate a test object fingerprint of the object, OBJ, as verification data (115) for verification for comparison with a reference object fingerprint, wherein each of the signature values is determined using a descriptor with a plurality of different filters, wherein the descriptor is designed to describe an image content in a local environment around a pixel in a compact form, wherein the test object fingerprint is represented as an image of signature values, wherein the test object fingerprint is combined with a part of an identification code, XYZ, uniquely assigned to the object, OBJ, in order to add the part of the identification code, XYZ, to the verification data (115), wherein the part of the identification code, XYZ, is read in response to a user input from a user interface (106) of the unit (100) for object assessment;
comparing (230) the test object fingerprint with at least one reference object fingerprint, wherein, for each object, OBJ*, previously confirmed as authentic, a reference data set, REF, with a true reference object fingerprint and a true identification code, XYZ*, can be retrieved and wherein the at least one reference object fingerprint, which is linked to the part of the identification code, XYZ, is used for the comparison; and
providing (240) result data (119) for verifying the authenticity of the object, OBJ, depending on a result of the comparison performed in step (230) of comparing, wherein the result data (119) are provided based on a match between the verification data (115) and a reference data set, REF, and include the complete identification code, XYZ, wherein the result data (119) include verification information about the authenticity of the object, OBJ.

2. Method (200) according to Claim 1, wherein, in the comparison step (230), signature values of the test object fingerprint are compared with signature values of a reference object fingerprint in order to find a correspondence between the test object fingerprint and a reference object fingerprint matching same, wherein the correspondence is found using a lookup table and an alignment image (350), wherein signature values serve as addresses for the lookup table and/or wherein, for each entered signature value, the lookup table comprises a local offset of a pixel position of a reference pixel of the signature value relative to a reference position, wherein the alignment image (350) is given alignment weights for the reference position using the lookup table in order to identify a global maximum (455) in the alignment image (350) as the reference position, wherein a global maximum (455) corresponds to a found correspondence.

3. Method (200) according to Claim 2, wherein the alignment image (350) is filtered, in particular using a smoothing filter or the like.

4. Method (200) according to any one of the preceding claims, wherein, in the reading-in step (210), image data (103) representing at least one recording of the at least one subsection (301) of the object, OBJ, are read in, wherein the at least one recording is created using at least one illumination setting which is predefined for the recording.

5. Apparatus (110) comprising means (112, 114, 116, 118) for carrying out the steps of the method (200) according to any one of the preceding claims.

6. Computer program comprising instructions that, when the program is executed by a computer, cause said computer to carry out and/or control the steps of the method (200) according to any one of Claims 1 to 4.

7. Machine-readable storage medium on which the computer program according to Claim 6 is stored.

8. Unit (100) for object assessment, wherein the unit comprises the apparatus (110) according to Claim 5, wherein the unit (100) comprises the image receiving device (102), wherein the image receiving device (102) and the apparatus (110) are connected to each other so as to have data transmission capability.

## Revendications

1. Procédé (200) de vérification de l'authenticité d'un objet, OBJ, l'objet, OBJ, étant optiquement reconnaissable et présentant des caractéristiques aléatoires uniques pour l'objet, OBJ, qui sont causées par un matériau de l'objet, OBJ, ayant au moins une propriété caractéristique qui résulte du hasard ou d'un processus aléatoire pendant la production de celui-ci, le procédé (200) comprenant les étapes suivantes :
la lecture (210) de données d'image (103) représentant au moins une section partielle (301), en particulier présentant les caractéristiques aléatoires uniques pour l'objet, OBJ, et optiquement reconnaissables, de l'objet, OBJ, à partir d'une interface (111) vers un dispositif d'enregistrement d'image (102) d'un appareil (100) d'évaluation d'objet ; et
le traitement (220) des données d'image (103) à l'aide d'une règle de traitement (113) selon laquelle une pluralité de valeurs de signature sont déterminées pour une pluralité de pixels d'une zone d'image des données d'image afin de générer une empreinte d'objet à tester de l'objet, OBJ, en tant que données de vérification (115) pour une vérification par comparaison avec une empreinte d'objet de référence, chacune des valeurs de signature étant déterminée au moyen d'un descripteur ayant une pluralité de filtres différents, le descripteur étant configuré pour décrire le contenu d'image dans un environnement local autour d'un pixel sous une forme compacte, l'empreinte d'objet à tester étant représentée sous la forme d'une image de valeurs de signature, l'empreinte d'objet à tester étant combinée avec une partie d'un code d'identification, XYZ, attribué de manière unique à l'objet, OBJ, afin d'ajouter la partie du code d'identification XYZ aux données de vérification (115), la partie du code d'identification XYZ étant lue pour l'évaluation d'objet en réponse à une entrée utilisateur provenant d'une interface utilisateur (106) de l'appareil (100) d'évaluation d'objet ;
l'exécution (230) d'une comparaison de l'empreinte d'objet à tester avec au moins une empreinte d'objet de référence, dans lequel, pour chaque objet, OBJ*, préalablement confirmé comme authentique, un ensemble de données de référence, REF, avec une empreinte d'objet de référence vraie et un code d'identification vrai, XYZ*, peut être récupéré et dans lequel, pour la comparaison, l'au moins une empreinte d'objet de référence, qui est associée à la partie du code d'identification, XYZ, est utilisée ; et
la fourniture (240) de données de résultat (119) pour vérifier l'authenticité de l'objet, OBJ, sur la base d'un résultat de la comparaison effectuée dans l'étape (230) d'exécution, les données de résultat (119) étant fournies sur la base d'une correspondance entre les données de vérification (115) et un ensemble de données de référence, REF, et comprenant le code d'identification complet, XYZ, les données de résultat (119) comprenant des informations de vérification concernant l'authenticité de l'objet, OBJ.

2. Procédé (200) selon la revendication 1, dans lequel, dans l'étape (230) d'exécution de la comparaison, des valeurs de signature de l'empreinte d'objet à tester sont comparées à des valeurs de signature d'une empreinte d'objet de référence afin de trouver une correspondance entre l'empreinte d'objet à tester et une empreinte d'objet de référence correspondant à celle-ci, la correspondance étant trouvée en utilisant une table de consultation et une image de vote (350), les valeurs de signature servant d'adresses pour la table de consultation et/ou la table de consultation comprenant, pour chaque valeur de signature fournie en entrée, un décalage local d'une position de pixel d'un pixel de référence de la valeur de signature par rapport à une position de référence, dans lequel, pour l'image de vote (350), des poids de vote pour la position de référence sont attribués au moyen de la table de consultation, afin d'identifier un maximum global (455) dans l'image de vote (350) comme position de référence, un maximum global (455) correspondant à une correspondance trouvée.

3. Procédé (200) selon la revendication 2, dans lequel l'image de vote (350) est filtrée, en particulier en utilisant un filtre de lissage ou similaire.

4. Procédé (200) selon l'une quelconque des revendications précédentes, dans lequel, dans l'étape (210) de lecture, des données d'image (103) sont lues, lesquelles représentent au moins une acquisition de l'au moins une section partielle (301) de l'objet, OBJ, l'au moins une acquisition étant créée en utilisant au moins un réglage d'éclairage prédéfini pour l'au moins une acquisition.

5. Dispositif (110) comprenant des moyens (112, 114, 116, 118) pour exécuter les étapes du procédé (200) selon l'une quelconque des revendications précédentes.

6. Programme informatique, comprenant des instructions qui, lors de l'exécution du programme par un ordinateur, amènent celui-ci à exécuter et/ou à commander les étapes du procédé (200) selon l'une quelconque des revendications 1 à 4.

7. Support de stockage lisible par machine, sur lequel est stocké le programme informatique selon la revendication 6.

8. Appareil (100) d'évaluation d'objet, l'appareil comportant le dispositif (110) selon la revendication 5, l'appareil (100) comportant le dispositif d'acquisition d'image (102), le dispositif d'acquisition d'image (102) et le dispositif (110) étant connectés l'un à l'autre d'une manière permettant la transmission de données.
